# EUROPEAN PATENT APPLICATION

(11) **EP 4 660 167 A1**
(43) Date of publication of application: **10.12.2025**
(21) Application number: 24179920.4
(22) Date of filing: 04.06.2024
(51) Int. Cl.: C03C 15/00, C03C 23/00, C03C 17/06

(54) **GLASS ELEMENT WITH VIAS**

(71) Applicant: SCHOTT AG, 55122 Mainz (DE); Schott Japan Corporation, Koka-shi, Shiga 528-0034 (JP)
(72) Inventor: OKANO, Yoshio, Shinjuku-ku, 162-0067 (JP); BAI, Xiaofei, 55122 Mainz (DE)
(74) Representative: Schott Corporate IP

(57) **Abstract**

The invention relates to a method for introducing vias 2 into glass substrates 1, said method comprising the steps of subjecting the glass substrate 1 to reactive ion etching applying an etching gas or etching gas mixture 31, 32, whereby the vias 2 are etched into the glass substrate 1 by interaction of the etching gas or etching gas mixture 31, 32 with the glass substrate 1; preferably the vias 2 represent a through-hole or a blind hole. The resulting structured glass substrate 1 and advantageous uses of the glass substrate are subject of the invention as well.

## Description

### The Field of the Invention

The present invention relates to a method for introducing vias into glass substrates, especially flat glass substrates. Such vias represent a microstructuring of the glass substrate and enable the glass substrate to be a base for an electrical or optical interconnect or other optical device. Such microstructured glass substrates are intended to be used especially in hybrid packages of modern microelectronic or micro-electrooptical devices. The resulting microstructured glass substrates, interconnects and optical devices are subject to the invention as well.

For applying the inventive method, a substrate surface of the glass substrate is coated with at least one structured mask layer and subsequently exposed to a reactive ion etching process (RIE) with at least one chemical etching gas.

Thereby vias representing through-holes or blind-holes are introduced into the glass substrate with high positioning accuracy and smaller through hole size tolerances. The glass substrate and/or the vias can later be metallized and or provided with an optical functionality.

### Related Art

DE 198 44 025 A1 describes different dry etching processes for working optical surfaces and for transferring optical structural elements to optical materials for microstructuring quartz, quartz glass and quartz-containing surfaces. Also a reactive ion etching process (reactive ion etching, RIE) is described, in which CF₄, C₂F₆ or CHFs are used as principal components of the etching gas mixed with SF₆, XeF₂, NF₃ or CH₄, as well as an ion beam etching process for local surface working. The ion energies should be greater than 600 eV, in order to guarantee a sufficiently high sputtering fraction in the etching process. A disadvantageous increase in surface roughness can be avoided by selection of the etching gas.

However no etching rates, which are sufficient for current applications, may be obtained by the described methods for some preferred types of glass.

For the microstructuring of glass substrates and the formation of through-holes or blind holes within glass substrates, the application of a laser based process followed by a wet-etch process is described as method of choice. US 11,891,326 B2 describes the process of introducing through-holes into a glass substrate by the application of an ultrashort pulsed laser. Due to non-linear effects induced by the ultrashort pulsed laser, a defect is introduced within the glass substrate. The defect follows the laser focus. In a following step, the defect of the glass substrate is enlarged by subjecting the glass substrate with the defect line to a wet chemical etching bath. In the named publication, liquid KOH or NaOH are used. HF is also described as wet etching bath in the literature.

### Summary of the Invention

It is an object of the present invention to provide a method for introducing vias to glass substrates of the above-described kind, by which problems occurring by the known laser-based methods are overcome.

It is especially an object of the present invention to provide a method for introducing vias to glass substrates of the above-described kind, which provides high quality via structures with smaller via dimensions and a high quality, especially a low roughness of the via sidewalls, and/or with a high precision of the geometry of the vias and/or with a high precision of the pattern of vias, in which the localization of the vias within the pattern corresponds highly with a predetermined and desired pattern.

It is an additional object of the present invention to provide a method for introducing vias to glass substrates of the above-described kind, which is also provides good results with economical glasses, which currently were considered to be unsuitable because of the poor physical volatility of their ingredients for microstructuring in reactive ion etching, short 'RIE' processes.

The object of the invention is solved by the principles being described in the independent claims. Preferable embodiments are subject to the dependent claims.

This object and others which will be made more apparent hereinafter is attained in a method for introducing vias to glass substrates, the method comprising the steps of subjecting the glass substrate to reactive ion etching applying an etching gas or etching gas mixture, whereby the vias are etched into the glass substrate by interaction of the etching gas or etching gas mixture with the glass substrate.

Thereby vias with high geometrical precision can be formed. The form of the via is especially a cylindrical or v-shaped via when cut along the via axis. The via can be present in the form of a through-hole or a blind hole.

According to an embodiment of the inventive method, the glass substrate is coated with at least one structured mask layer and subsequently exposed to a chemically reactive ion etching process (RIE) with at least one etching gas or etching gas mixture. In particular, the method advantageously comprises the steps of: a) coating a substrate surface of a glass substrate with at least one structured mask layer; b) preparing an etching gas or an etching gas mixture; and c) performing a reactive ion etching process in which the substrate surface with the at least one structured mask layer is exposed to the etching gas or etching gas mixture.

According to an embodiment of the invention, an etching gas mixture containing at least one noble gas and/or oxygen is applied, so that the proportion of sputtering etching in the ion etching process is significantly increased. Advantageously, the etching gas mixture contains at least one chemical etching gas and at least one noble gas in a mixture ratio of the chemical etching gas to the at least one noble gas of from 1:1 to 6:1 or from 2:1 to 6:1, preferably from 1:1 to 4:1 or from 2:1 to 4:1, in order to form an etching gas mixture. When oxygen is present, its content is included in the amount of noble gas for the calculation of the aforesaid ratios.

The dry etching method according to the invention by means of RIE forms vias in glass substrates, usually flat glass, especially flat glass wafers and flat glass panels. The glass used can have a thickness of about 2 micron to up to the desired thickness, usually up to 1000 micron or up to 500 micron or up to 200 micron. The substrate surface is first coated with at least one structured mask layer and subsequently chemically etched with a reactive ion etching method with at least one chemically etching gas.

Instead of a pure RIE method a MERIE method can also be used in the method of the invention, in which the RIE process is magnetically assisted. Both are referred to as reactive ion etching, short RIE, in the context of this invention. A preferred reactive ion etching method comprises that the chemical etching gas is mixed with at least one noble gas and/or oxygen, so that the proportion of the sputtering etching is increased significantly in the reactive ion etching method. Of course other RIE based processes such as ICP-RIE and the like are also comprised by the term reactive ion etching or RIE as used in this description.

Or, with other words, the method comprises that the reactive ion etching process comprises a proportion of sputtering etching. Therein, advantageously, at least one noble gas is comprised in the etching gas mixture as sputtering gas. Most advantageously a major portion of the etching gas mixture comprises a chemical etching gas.

Thus the advantages of the reactive ion etching, in which a chemical reaction with the reaction gas occurs and volatile reaction products are formed, and physical sputtering etching, in which atoms and clusters are released by mechanical impact by bombardment with ions, are combined especially significantly with each other in unexpected ways. Ingredients, which are not chemically released and remain, are released by physical sputtering. This leads, on the one hand, to high etching rates and, on the other hand, to a more precise structure transfer with very small structure dimensions because of the anisotropic erosion due to sputtering. Furthermore a surface with reduced roughness, which scarcely differs from the roughness of the substrate glass, is produced. This RIE process does not significantly increase the surface roughness in comparison to an unetched glass surface. In contrast even improved roughness could be observed.

It was observed that the plasma power, pressure, and whether or not a noble gas was added during the process showed an influence of the surface roughness. This also applies to the surface roughness if the via sidewalls.

It has been surprisingly established that a considerable increase of the etching rate results from the use of an etching gas mixture of at least one etching gas and a noble gas in comparison to both a purely physical etching and also a purely chemical etching. This increase of etching rate may not be explained with the known models, according to which glasses with a high silicon dioxide content have a higher etching rate than those with a reduced SiO₂ content, and nearly the same etching rates to multi-component flat glasses were found in purely physical etching. Surprisingly especially good results are obtained for types of glass, for which no good chemical etching results can be expected. This again is based on the unexpected combination of physical and chemical components of the etching method.

In tests it has been shown that CF₄ and/or SF₆ are especially suitable as a chemical etching gas and argon are especially suitable as sputtering gas. Especially the combination of both these gases leads to a high etching rate. The method according to the invention is however not limited to both these gasses. Furthermore mixing with other etching gases, for example CHF₃, C₂F₆, and other sputtering gases (noble gases), for example Ar, Ne, Kr, Xe and O₂, has proven to be advantageous.

Furthermore in a surprising way varying the composition of the CF₄ and argon or likewise SF₆ and argon in the etching gas can maximize the etching rate. The other noble gases can be applied as well. In a particularly preferred embodiment of the invention the CF₄ and argon are present in the etching gas in a mixture ratio between 1:1 and 6:1, preferably in a mixture ratio between 2:1 and 6:1, especially preferably in a mixture ratio between 2:1 and 4:1, and most preferably in a mixture ratio of about 3:1, so that the CF₄ is the major portion of the etching gas.

Different types of glass react very differently to a variation of the composition of the etching gas (especially the variation of the relative amounts of CF₄ and argon) in the RIE method according to the invention, as shown by use of the method. SiO₂ is rapidly chemically etched with CF₄ of SF₆ so that its chemical etching rate is comparatively large. CF₄ of SF₆ have been found to be similarly efficient. Glass that contains aluminum, titanium, alkali oxides and other ingredients is comparatively more difficult to etch chemically. It has been shown that especially the etching rate of these more difficult-to-etch types of glass can be considerably increased (especially with increases in the proportion of the etching due to sputtering by argon ions). A comparatively high etching rate, which has a pronounced maximum when etching gas composition is varied, is obtained with flat glass containing SiO₂ and B₂O₃ in a sum total amount of from 60 to 90 (even 95) percent by weight, such as Schott Glass Type BF 40 and AF 45. A very much smaller etching rate results with other types of Schott Glass, e.g. 8261, 8264, BF 33 and B270, under comparable conditions. The above-described maximum was not observable or was substantially weaker with these latter glass types. That means that different glass types react differently to the physical components during etching erosion, namely to the accompanying argon ions. This behavior is surprising and could not be expected from the results of the comparative experiments. These comparative experiments were performed in an ion beam apparatus with an argon ion beam (purely physical erosion or removal). The etching rate in these comparative experiments depends only weakly on the glass type.

It is known that silicon oxide glass may be satisfactorily etched. However this glass is difficult to produce and is expensive in comparison to multi-component glass. Furthermore wafer manufacture from flat glass is simpler and more economical than with SiO₂ or other bulk glasses. A preferred embodiment provides that the method according to the invention is performed with a multi-component glass, which contains at least three components. It has been shown that a series of these multi-component glasses have an etching rate behavior and structure transfer precision comparable to that of silicon oxide glass, in so far as the method according to the invention is concerned. The RIE method according to the invention thus allows economical starting materials to be used without losing etching quality and rate.

Suitable multi-component glass especially includes those with oxide ingredients, which preferably contain SiO₂ and above all contain boron oxide, aluminum oxide and/or at least one alkali oxide. Borosilicate glass is most preferred. Economical boron-containing flat glasses of Schott AG marketed under the trade names BF 40 [about 89 percent (SiO₂ +B₂O₃) and 10 percent (Na₂O, K₂O, Al₂O₃)] and AF 45 [about 64 percent (SiO₂ +B₂O₃) and 36 percent (BaO, Al₂O₃)] have especially good etching behavior. However it is also possible to apply the method according to the invention to glass that is non-oxidic, for example chalcogenides.

In general terms, borosilicate glasses in which the contents of SiO2+B2O3 and Na2O+K2O+Al2O3 relate to 96 and 4 respectively and/or 96 and 3 respectively, are especially suitable as glass substrate in the meaning of the invention.

The dependence of etching rate for different types of glass on process gas pressure was measured, as one example, for a pure CF₄ plasma and it was established in a surprising way that the optimum pressure is in a region from 30 mtorr (about 4 Pa) to 60 mtorr (about 8 Pa). The etching rate decreases with increasing process gas pressure above about 60 mtorr. This dependence is based on the fact that the ion etching method is always a combination of chemical reaction (by reactive radicals of the etching gas) and physical erosion (by ion bombardment with plasma ions). At high pressure and thus inherently reduced bias voltage the physical etching component is small, but at very low pressure sufficient reactive radicals of etching gas are not available.

A preferred embodiment of the method according to the invention provides that the substrate surface is coated with a hardmask and the hardmask is structured before performing the RIE and/or MERIE method. Other RIE processes such as DRIE, ICP-RIE and the like can also be applied and are covered by the principles of this invention. The hardmask may contain a metal layer. The structuring especially results in a predefined pattern, which represents the localization of the vias. Transition metals like chromium and nickel have proven especially satisfactory as the hardmask, especially if the hardmask contains or consists of a metal layer with said metals. The structured hardmaks is used as a hard mask for the subsequent chemically reactive ion etching method according to the invention.

Transition metals like chromium and nickel are especially suitable for this type of dry etching process, since it is comparatively resistant to etching gas, such as CF₄, SF₄ or mixtures of these gases with e.g. argon. In contrast photo resist layers cover the substrate surfaces only about 10 min in etching plasma with the above-described etching gas and are completely removed in this time period by the etching gas plasma. A shading or shadow effect can easily occur with the thicker resist layers.

The hardmask coating occurs advantageously using a magnetron sputtering method, by which suitable layer thickness is provided on the substrate, which are of the order of 150 nm.

The hardmask coating might be attacked during the etching process and at least partially etched away. In order to avoid or eliminate a process step comprising subsequent removal of the remaining hardmask, in a further preferred embodiment of the invention the thickness of the hardmask is selected so that it is completely etched away during the etching process.

In one embodiment, a photolithographic process for structuring the hardmask is added following this coating process according to a further preferred embodiment of the method according to the invention. Here it is of advantage to coat a resist layer on the hardmask. Subsequently the resist layer can be illuminated with a mask and developed so that the hardmask is exposed on certain desired areas. Subsequently the exposed hardmask areas are removed by etching or grinding. In those areas, the RIE process introduces the vias into the substrate.

Such photolithographic processes are commonly established in the semiconductor industry. The application of such process for introducing vias to the glass substrate promotes the integration of glass substrates according to the invention to combined device also comprising microstructured silicon elements and/or semiconductors.

It has been advantageously established that the resist layer is stabilized when a soft-bake treatment occurs after application of the resist layer and/or a hard-bake treatment occurs after development of the resist layer.

The hardmask is removed by wet chemical methods, for example with sulfuric acid, after the ion etching method according to the invention has been performed.

The resulting mask especially represents a pattern of removed metal layer areas, from which the vias are etched.

In another embodiment, the photoresist is applied to the substrate. A hardmask containing the desired pattern in then applied to the photorestist layer, which then is illuminated and developed. The developed areas are then removed and the vias are introduced in those areas by the RIE process.

The general principle might be summarized as: A resist layer is applied to the hardmask, said resist layer is illuminated and then developed and subsequently the illuminated hardmask regions are etched away building a negative photoresist layer or subsequently the illuminated hardmask regions stay on the substrate building a positive photoresist layer.

The RIE process described herein enables the introduction of vias with high precision into the glass substrate. The vias have at least one property selected from the group

| | |
|---|---|
| Via hole diameter: | 0.5 micron to 25 micron |
| diameter tolerance: | better than +/- 0.1 micron |
| Position tolerance: | better than +/- 0.1 micron |
| Wall angle: | larger than 75° |

The wall angle is measured as the angle from the main surface of the glass substrate to the via sidewall. A 90° wall angle refers to a via wall being rectangular to the main surface.

As can be seen from the aforesaid, the vias especially represent micro-vias and/or microstructures in general. The vias advantageously have a length of 1 micron to 50 micron, especially from 1 micron to 30 micron or from 1 micron to 22 micron.

The glass substrate itself has in most applications an advantageous thickness from 1 micron to 50 micron, especially from 1 micron to 30 micron or from 1 micron to 22 micron, therefore corresponding to the length of the via. However, it is possible to use thicker glass substrates in the RIE process step and to introduce blind holes in the thicker glass substrate, which is later grinded or etched to a lower thickness, at which the blind holes are opened and the vias represent through-vias. Such process steps might especially applied if the mechanical stability of the glass substrate is an issue in the RIE etching and potentially later metallization processes. The grinding to lower thicknesses can also be applied subsequent to a metallization. Accordingly, the thickness of the glass substrate might also be in a range up to 1 mm, typically up to 700 micron or up to 500 micron, with lowest thickness values of 50 micron, 30 micron, 22 micron or from 1 to 10 micron respectively.

Whether or not the glass substrate is grinded to lower thicknesses, the invention also comprises, that the vias in the glass substrate can be metallized in a further process step.

By application of the aforesaid RIE process, a gradient of the chemical composition of the glass substrate can be advantageously introduced in the area of the via, with the chemical composition at the via inner wall differing from the chemical composition differs from the chemical composition of the substrate at a plane being parallel to the referring via wall and having a distance to the via wall of 0.5 micron

It is assumed, that the gradient represents a depletion of glass components in the area of the inner via wall, preferably a depletion of alkali metal or earth alkali metals components of the glass composition.

Thereby the adherence of the metal layer resulting from the metallization is improved by the gradient of the chemical composition of the glass substrate within the via, especially when compared to a via without such gradient and/or depletion.

The RIE processes allow precise control over both the etching rate and depth. This capability results in accurate and reproducible structures. The RIE process enables etching with steep sidewalls, which is crucial for microelectronic applications. Unlike isotropic plasma etching, RIE primarily etches in a downward direction, limiting lateral movement.

Traditional RIE exhibits high levels of anisotropy compared to competing technologies. Anisotropic etching means that the etching proceeds predominantly in one direction, resulting in well-defined features with minimal undercutting. This anisotropic behavior is particularly important for microsystems device fabrication, as it allows precise control of device dimensions, leading to reduced development costs and improved production yields.

Another advantage provided by the invention is, that the RIE processes achieve high etch rates compared to other chemical etching methods. The ion bombardment in RIE enables better control of the etching direction, resulting in sharp features.

The ability to form high-aspect-ratio structures (i.e., deep etches with narrow sidewalls) is a notable advantage. This feature is essential for creating accurate feature sizes and reducing undercutting.

As described above, the inventive method has the advantage of introducing vias with high precision into the glass substrate. As direct consequence of applying the described method, the invention also comprises a glass substrate containing vias having least one property selected from the group:

| | |
|---|---|
| hole diameter: | 0.5 micron to 25 micron |
| diameter tolerance: | better than +/- 0.1 micron |
| Position tolerance: | better than +/- 0.1 micron |
| Wall angle: | larger than 75° |

The invention also comprises a glass substrate having a pattern of vias, wherein there is a gradient of the chemical composition of the glass composition, wherein the gradient represents a depletion of glass components in the area of the via inner wall, preferably a depletion of alkali metal or earth alkali metals components of the glass composition.

In another embodiment, the vias in an aforementioned glass substrate are metallized. The metallization can have a significantly improved adherence to the glass, especially at the inner wall of the vias, especially due to the reasons discussed above.

The invention also comprises beneficial applications of the glass substrate with the vias described herein. Those uses also comprise the use of elements comprising such glass substrates. Advantageous uses are, including any combinations thereof, the use as
a) interposer,
b) optical device,
c) optical, wherein at least one via represents a waveguide for electromagnetic radiation,
d) optical device, wherein at least one via is filled with a material acting as waveguide for electromagnetic radiation.
e) optical device, wherein at least one via is filled with a glass based material having a refractive index being higher than the refractive index of the glass substrate material,
f) optical interconnect comprising the optical device according d) or e), or
g) element of an IC package, especially 2.5D IC or 3D IC package.

Further applications can be foreseen and are also covered by the scope of the invention.

### Brief Description of the Drawings

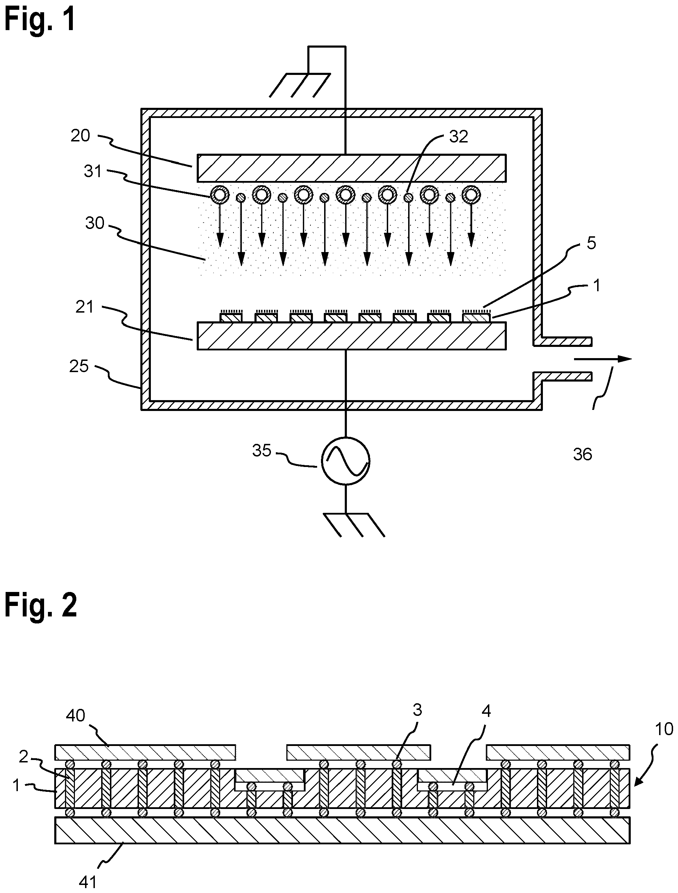

The objects, features and advantages of the invention will now be illustrated in more detail with the aid of the following description of the preferred embodiments, with reference to the accompanying Figures 1 and 2. Fig. 1 is a schematic cross-sectional view of an apparatus for microstructuring, which performs the method according to the invention.

Figure 2 is a schematic cross-sectional view of an assembly comprising a glass substrate with vias, which are introduced into the glass substrate with the method described herein.

### Description of preferred Embodiments

A plasma reactor, in which a top-electrode 20 and a bottom electrode 21 are arranged opposite to each other in a vacuum chamber 25, is shown in Figure 1. A cooling device (not shown) might be present to cool the electrodes or a specific electrode.

The glass substrate 1, especially a wafer or sheet made of flat glass being substrate to the microstructuring, rests on the bottom electrode 21, which might act as cathode. A high frequency RF generator 35 is provided, which produces high frequency electrical power, which is coupled or introduced into the glass substrate 1 by means of the bottom electrode 21.

The vacuum chamber 25 contains an outlet connected to a vacuum pump 36, through which the respective gas mixtures can leave as well.

Experiments were for example performed with two flat glass samples made of Schott Glass BF 40 and Schott Glass AF 45 respectively, which acted as substrates and had a size of about 30x30 cm². A surface of each flat glass substrate was coated with a chromium coating 5 of 150 nm thickness in a magnetron sputtering process. After that a photolithographic process for structuring the chromium was performed.

In this photolithographic process first a resist, for example AZ 5214 E (Manufacturer: Clariant) was spun on so that a resist thickness of 1.4 micron was attained. The resist layer was subjected to a soft-bake process. Subsequently the resist with a test mask in a mask aligner was illuminated. In order to determine the minimal structure resolution, an electron beam written mask was used. The resist was then developed with a developer, e.g. AZ 826 MIF (Manufacturer: Clariant). Subsequently the resist was subjected to a hard-bake process. Then the chromium layer was structured with chromium etch at 50 degrees centigrade. The chromium-etch etching bath comprised (NH₄)₂Ce(NO₃)₆ and CH₃COOH in water.

The chromium layer structured in this way serves as a mask layer for subsequent dry etching processes, which for example occurred in the above-described plasma reactor. The chromium mask layers were removed wet-chemically with sulfuric acid after the etching process.

The etching gas mixture in the shown embodiment contains a noble gas 31 and the reaction gas 31, for example Argon and Fluorine.

Very small structures with the dimensions described above could be obtained with the process according to the invention.

The manufacture of electronic and/or opto-electronic components is an especially preferred embodiment for the microstructuring method according to the invention.

Fig. 2 shows, as said, a schematic view of an assembly comprising a glass 1 substrate with vias 2, which are introduced into the glass substrate 1 with the method described herein. The vias 2 are filled and/or metallized with or comprising a conductor for electrical current. The glass substrate 1 in this example represents a glass interposer 10. The glass substrate 1 or can be connected to further substrates 40, 41, which can especially be silicon substrates, PCBs or further glass substrates, in this case by means of solder bumpers 3.

As can be seen, the glass substrate 1 might also comprise cavities 4, which can be produced by the method described herein as well. Such interposer 10 can be applied for various applications, as described exemplarily herein.

While the invention has been illustrated and described as embodied in a method of microstructuring glass substrates and a microstructured glass substrate, it is not intended to be limited to the details shown, since various modifications and changes may be made without departing in any way from the spirit of the present invention.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention.

Compared to other methods of introducing micro-vias into glass substrates, especially ultrashort-pulsed laser-baser methods, the invention provides the advantage, that the vias can be introduced with a high precision, especially concerning variance in hole diameter and/or positioning tolerances. Furthermore, the obtained vias have smooth wall surfaces with comparably low Ra values, especially if a sputtering components is comprised in the RIE process. Overall, the vias can be introduced into the glass substrate with a high efficiency.

## Claims

1. A method for introducing vias 2 into glass substrates 1, said method comprising the steps of subjecting the glass substrate 1 to reactive ion etching applying an etching gas or etching gas mixture 31, 32, whereby the vias 2 are etched into the glass substrate 1 by interaction of the etching gas or etching gas mixture 31, 32 with the glass substrate 1; preferably the vias 2 represent a through-holes or blind holes.

2. The method according to claim 1, comprising the steps of: a) coating a substrate surface of a glass substrate 1 with at least one structured mask layer 5; b) preparing an etching gas or an etching gas mixture 31, 32; and c) performing a reactive ion etching process in which the substrate surface with the at least one structured mask layer 5 is exposed to the etching gas or etching gas mixture 31, 32.

3. The method according to any of the preceding claims, wherein the etching gas mixture contains at least one chemical etching gas 32 and at least one noble gas 31 in a mixture ratio of the chemical etching gas to the at least one noble gas and/or oxygen of from 1:1 to 6:1, preferably from 2:1 to 6:1 or from 2:1 to 4:1, in order to form an etching gas mixture.

4. The method according to any of the preceding claims, wherein the reactive ion etching process comprises a proportion of sputtering etching; preferably at least one noble gas 31 is comprised in the etching gas mixture as sputtering gas, wherein most preferably a major portion of the etching gas mixture consists of the chemical etching gas 32.

5. The method according to any of the preceding claims, wherein the chemical etching gas 32 contains Cl, F, CF₄, SF₆ or CHF₃ or C₂F₆ as principal component and/or the at least one noble gas 31 used as sputtering gas comprises Argon and/or Ne, Kr and Xe.

6. The method according to any of the preceding claims, wherein said glass is a multi-component glass containing at least three ingredients; preferably the multi-component glass comprises boron oxide, aluminum oxide and at least one alkali oxide; more preferably said glass contains SiO₂ and B₂O₃ and a sum total of said SiO₂ and B₂O₃ present in the glass is from 60 to 96 percent by weight; most preferably said glass contains additionally Al₂O₃, B₂O₃ and/or TiO₂ and a sum total of said Al₂O₃, B₂O₃ and/or TiO₂ present in the glass is from 5 to 40 percent by weight.

7. The method according to any of the preceding claims, wherein said substrate surface is coated with a hardmask 5 and the hardmask 5 is subjected to a structuring process; preferably the hardmask is a chromium or nickel layer; most preferably said hardmask is applied to the substrate surface using a magnetron sputtering process.

8. The method as defined in claim 7, wherein the hardmask 5 is structured by a photolithographic process.

9. The method as defined in claim 8, wherein a resist layer is applied to the hardmask 5, said resist layer is illuminated and then developed and subsequently the illuminated hardmask regions are etched away building a negative photoresist layer or subsequently the illuminated hardmask regions 5 stay on the substrate building a positive photoresist layer.

10. The method as defined in claim 9, further comprising a soft-bake treatment after etching away the resist layer and/or a hard-bake treatment after developing the resist layer.

11. The according to any of the claims 7-10, further comprising removing hardmask 5 residue after the ion etching process by wet chemical methods.

12. The method according to any of the claims 7-11, wherein the structuring process results in a pattern of removed hardmask areas, from which the vias 2 are etched.

13. The method according to any of the preceding claims, wherein the vias 2 have at least one property selected from the group
| | |
|---|---|
| via hole diameter: | 0.5 micron to 25 micron |
| diameter tolerance: | better than +/- 0.1 micron |
| Position tolerance: | better than +/- 0.1 micron |
| Wall angle: | larger than 75° |

14. The method according to any of the preceding claims, wherein the vias 2 have a length from 1 micron to 50 micron, especially from 1 micron to 30 micron; preferably the glass substrate has a thickness from 1 micron to 1 mm, especially from 1 micron to 700 micron or from 1 micron to 500 micron or from 1 micron to 50 micron or from 1 micron to 30 micron or from 1 micron to 22 micron.

15. The method according to any of the preceding claims, wherein the vias 2 are metallized in a further process step.

16. The method according to any of the preceding claims, wherein a gradient of the chemical composition of the glass substrate 1 is introduced in the area of the via 2, with the chemical composition at the via inner wall differing from the chemical composition of the substrate at a plane being parallel to the referring via inner wall and having a distance to the via inner wall of 0.5 micron; preferably the gradient represents a depletion of glass components in the area of the inner via wall, preferably a depletion of alkali metal or earth alkali metals components of the glass composition; most preferably the adherence of a metal layer resulting from a metallization is improved by the gradient of the chemical composition of the glass substrate 1 in the area of the via inner wall.

17. A glass substrate 1 according to claim having a pattern of vias 2, wherein there is a gradient of the chemical composition of the glass composition, wherein the gradient represents a depletion of glass components in the area of the via inner wall, preferably a depletion of alkali metal or earth alkali metals components of the glass composition; preferably the vias are metallized

18. A glass substrate 1 according to claim 17, whereas the majority of the vias 2 have least one property selected from the group
| | |
|---|---|
| Via hole diameter: | 0.5 micron to 25 micron |
| diameter tolerance: | better than +/- 0.1 micron |
| Position tolerance: | better than +/- 0.1 micron |
| Wall angle: | larger than 75° |

19. Use of a glass substrate 1 according to any of claims 17-18 or use of said glass substrate within an element comprising said glass substrate 1, wherein those uses are selected from an item in the group or any combination thereof
a) interposer,
b) optical device,
c) optical, wherein at least one via represents a waveguide for electromagnetic radiation,
d) optical device, wherein at least one via is filled with a material acting as waveguide for electromagnetic radiation.
e) optical device, wherein at least one via is filled with a glass based material having a refractive index being higher than the refractive index of the glass substrate material,
f) optical interconnect comprising the optical device according d) or e),
g) element of an IC package, especially 2.5D IC or 3D IC package.
